(19) Europäisches Patentamt / European Patent Office / Office européen des brevets

(11) **EP 4 310 743 B1**

(12) **EUROPEAN PATENT SPECIFICATION**

(45) Date of publication and mention
of the grant of the patent:
**11.03.2026 Bulletin 2026/11**

(21) Application number: **23167675.0**

(22) Date of filing: **13.04.2023**

(51) International Patent Classification (IPC):
**G06Q 10/04** *(2023.01)*   **G08B 31/00** *(2006.01)*

(52) Cooperative Patent Classification (CPC):
**G06Q 10/04; Y02A 10/40**

(54) **EARLY-WARNING AND REGULATING CONTROL SYSTEM FOR DISSOLVED GAS SUPERSATURATION IN FLOOD DISCHARGE OF HYDRAULIC DAM**

FRÜHWARN- UND REGELSTEUERUNGSSYSTEM ZUR ÜBERSÄTTIGUNG VON GELÖSTEM GAS BEI DER FLUTENTLADUNG EINES HYDRAULISCHEN DAMMS

SYSTÈME DE COMMANDE D'ALERTE PRÉCOCE ET DE RÉGULATION POUR SURSATURATION DE GAZ DISSOUS DANS UNE DÉCHARGE D'INONDATION DE BARRAGE HYDRAULIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.07.2022 CN 202210856373**

(43) Date of publication of application:
**24.01.2024 Bulletin 2024/04**

(73) Proprietor: **China Three Gorges Corporation**
**Wuhan, Hubei 430010 (CN)**

(72) Inventors:
- **DAI, Huichao**
  **Wuhan, Hubei 430010 (CN)**
- **MAO, Jingqiao**
  **Wuhan, Hubei 430010 (CN)**
- **DAI, Jie**
  **Wuhan, Hubei 430010 (CN)**
- **JIANG, Dingguo**
  **Wuhan, Hubei 430010 (CN)**
- **CHEN, Yanhong**
  **Wuhan, Hubei 430010 (CN)**
- **GONG, Yiqing**
  **Wuhan, Hubei 430010 (CN)**

(74) Representative: **Patentanwälte und Rechtsanwalt**
**Weiß, Arat & Partner mbB**
**Zeppelinstraße 4**
**78234 Engen (DE)**

(56) References cited:
**CN-A- 113 222 296    CN-B- 106 544 982**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This specification relates to the field of hydraulic technologies, and specifically to an early-warning and regulating control system for dissolved gas supersaturation in flood discharge of a hydraulic dam.

### BACKGROUND

Large-scale water conservancy and hydropower projects may be used for power supply, irrigation, flood control, flood discharge, resistance to extreme floods, and the like. However, water conservancy projects may cause some adverse impacts in an operation process. In a flood discharge process of water discharge structures of high dams, gas is mixed into water flow, resulting in supersaturation of total dissolved gas in water, and causing some harms to an aquatic ecological environment. As water flows downstream, supersaturated gas dissipates slowly, and the saturation of gas remains high in a water body over a very long distance for a very long time. The supersaturation of gas dissolved in the water body also causes adverse impacts to downstream buildings and downstream ecological environment. Therefore, it is important to provide an early warning about key factors such as supersaturation of gas dissolved in a water body in a flood discharge process of high dams to maintain the health of aquatic ecological environment.

The current research on a gas supersaturation phenomenon that occurs in a flood discharge process of high dams mainly focuses on the impact of supersaturated gas on downstream fishes. Existing technical measures are mainly aimed at promoting the release of supersaturated gas and mitigating the phenomenon of gas supersaturation. The task of real-time monitoring of a gas saturation degree in a flood discharge process of high dams is very complex because various parameters change dynamically in real time in the flood discharge process of high dams and have obvious uncertainties. Document CN113222296A discloses a flooding control dispatching method based on digital twins and document CN106544982B discloses a discharge gas dissolved gas oversaturation warning system and method for cascade reservoirs.

### SUMMARY

In view of this, the embodiments of this specification provide an early-warning and regulating control system for dissolved gas supersaturation in flood discharge of a hydraulic dam, which can monitor a gas saturation degree in a downstream water body in a flood discharge process of high dams accurately in real time.

The embodiments of this specification provide an early-warning and regulating control system for dissolved gas supersaturation in flood discharge of a hydraulic dam, including a flood discharge body digital module, a flood discharge digital twin module, a data interaction prediction module, and an early-warning protection module, where

the flood discharge body digital module is configured to acquire multi-scale data related to a flood discharge process of a target dam and includes a flood discharge basin data unit, a flood discharge influence factor unit, and a basin physical and chemical monitoring unit,
where the flood discharge basin data unit is configured to acquire real basin data involved in flood discharge of the target dam, the real basin data including topographical data, mainstream tributary confluence data, mainstream tributary flow data, and obstacle data of a downstream basin of the target dam and basic engineering data of the target dam;
the flood discharge influence factor unit is configured to determine influence factor data related to the flood discharge process of the target dam, the influence factor data including a flood discharge scheduling scheme factor, an environmental factor, and a water quality physical and chemical parameter factor;
the basin physical and chemical monitoring unit is configured to detect multi-dimensional physical and chemical property data of a water body in the downstream basin of the target dam; and
the multi-scale data includes the real basin data, the influence factor data, and the multi-dimensional physical and chemical property data;
the flood discharge digital twin module is configured to construct a flood discharge digital twin corresponding to the flood discharge process of the target dam according to the multi-scale data and includes a dam digital twin unit and a downstream basin digital twin unit;
where the dam digital twin unit is configured to construct a dam digital twin according to the basic engineering data and the flood discharge scheduling scheme factor;
the downstream basin digital twin unit is configured to construct a downstream basin digital twin according to the topographical data, the mainstream tributary confluence data, the mainstream tributary flow data, and the obstacle data of the downstream basin; and

the flood discharge digital twin includes the dam digital twin and the downstream basin digital twin;

the data interaction prediction module is configured to perform data mirror interaction on the flood discharge body digital module and the flood discharge digital twin module and predict a dissolved gas supersaturation status based on the flood discharge digital twin and includes a data interaction unit, a machine learning unit, and an intelligent prediction unit,

where the data interaction unit is configured to receive, store, and process the multi-scale data, perform real-time digital synchronization on the flood discharge digital twin according to the multi-scale data, and construct a gas supersaturation prediction model based on the flood discharge digital twin;

the machine learning unit is configured to perform learning and training with the multi-dimensional physical and chemical property data as training data and determine a tolerance relationship function between an aquatic life tolerance zone and a gas supersaturation degree; and

the intelligent prediction unit is configured to predict a dissolved gas supersaturation status in the downstream basin by using the gas supersaturation prediction model and includes a saturation degree prediction module and a saturation attenuation prediction module; and

the early-warning protection module is configured to generate early-warning information according to the dissolved gas supersaturation status predicted by the intelligent prediction unit and perform protective regulating on aquatic life in the downstream basin based on the tolerance relationship function.

Optionally, the basin physical and chemical monitoring unit includes an underwater gliding detection apparatus and a plurality of cross-sectional observation apparatuses;

the underwater gliding detection apparatus is configured to detect fish living information and supersaturated gas concentrations at different detection positions and different water depths in the downstream basin and includes a bionic gliding body and an ultrasonic sensor, an underwater imager, and a water quality multi-parameter analyzer that are carried on the bionic gliding body;

the plurality of cross-sectional observation apparatuses are disposed at a plurality of key cross-sections in the downstream basin, and are configured to measure gas supersaturation degrees corresponding to the key cross-sections; and

the ultrasonic sensor is configured to detect various fishes in the downstream basin, the underwater imager is configured to capture, recognize, and determine living behavior data of the various fishes, and the water quality multi-parameter analyzer is configured to monitor and analyze supersaturated gas concentration data, water temperature data, and water depth data in a current water body.

Optionally, a vertical movement traj ectory of the underwater gliding detection apparatus in the water body is:

$$Z = Asin(\omega x + \varphi) + b,$$

where $Z$ represents a movement vertical depth of the underwater gliding detection apparatus in the water body, $A$ is a vertical extension coefficient, $x$ represents a monitoring position, $\omega, \varphi$ are flow direction monitoring coefficients, and $b$ is an uncertainty coefficient.

Optionally, the data interaction unit is configured to construct the gas supersaturation prediction model based on the flood discharge digital twin by a method including the following steps:

determining, by the gas supersaturation prediction model, a gas supersaturation degree at a starting point in the downstream basin as an initial condition of the gas supersaturation prediction model based on the basic engineering data and the flood discharge scheduling scheme factor;

performing, by the gas supersaturation prediction model, predictive calculation based on the initial condition in combination with the topographical data, the mainstream tributary confluence data, the mainstream tributary flow data, and the obstacle data of the downstream basin, and determining gas supersaturation degree prediction values at the plurality of key cross-sections in the downstream basin;

comparing the gas supersaturation degrees at the plurality of key cross-sections measured by the plurality of cross-sectional observation apparatuses with the corresponding gas supersaturation degree prediction values, and if a difference between the two values exceeds a preset threshold, performing prediction again by taking the gas supersaturation degrees measured by the cross-sectional observation apparatuses as an updated initial condition of the gas supersaturation prediction model; and

updating and iterating the gas supersaturation prediction model by multiple times of comparisons, until the gas supersaturation degrees measured by the cross-sectional observation apparatuses at the plurality of key cross-sections all match the corresponding gas supersaturation degree prediction values.

Optionally, the saturation degree prediction module is configured to predict the gas supersaturation degree at the starting point in the downstream basin by the following formula:

$$G = 0.5 \frac{\Delta P_d}{P_0} \beta_1 \beta_2 e^{h_d^{0.5}}$$

,

where $G$ represents the gas supersaturation degree, $\Delta P_d$ represents an average relative pressure of the downstream basin, $P_0$ represents a water body initial pressure, $\beta_1$ represents a flood discharge scheduling scheme coefficient, $\beta_2$ represents a correction coefficient, and $h_d$ represents a local water depth in the downstream basin.

Optionally, the saturation attenuation prediction module is configured to predict supersaturated gas release coefficients at the plurality of key cross-sections by the following formula:

$$k_{i+1} = k_i \left( \tau \sqrt{\frac{\Psi_t u_i}{h}} + \xi (\phi_i - 1) \frac{Q}{h^2 u_i} \right)$$

,

where $k_i$, $k_{i+1}$ respectively represent supersaturated gas release coefficients at an $i_{th}$ key cross-section and an $(i+1)^{th}$ key cross-section, $\tau$ represents a gas release correction coefficient, $\Psi_t$ represents a gas diffusion coefficient, and $u_i$ represents an average flow rate at the $i^{th}$ key cross-section, $h$ represents a cross-sectional average water depth, $Q$ represents a cross-sectional average flow, and $\phi_i$ represents a mainstream tributary confluence coefficient.

Optionally, the tolerance relationship function is:

$$F = (v, s, G, T, H)$$

,

where $F$ represents the tolerance relationship function, $v$ represents an average swimming speed of target fish, $s$ represents an average body length of the target fish, $G$ represents a gas supersaturation degree at a position where the target fish is located, $T$ represents a water body temperature of the tolerance zone, and $H$ represents a water body depth of the tolerance zone.

Optionally, the early-warning protection module includes an early-warning regulating unit; and
the early-warning regulating unit is configured to determine an optimal tolerance zone for the target fish by using the tolerance relationship function and according to the dissolved gas supersaturation status predicted by the intelligent prediction unit, and release a biological guidance signal to guide the target fish to dive or rise to the optimal tolerance zone.

Optionally, the early-warning protection module includes an announcement unit;

the announcement unit is configured to generate the early-warning information according to the predicted dissolved gas supersaturation status and announce the early-warning information; and
the announcement unit is further configured to generate ecological optimized regulating information, mainstream tributary adjustment information, and aquacultural adjustment information corresponding to the early-warning information.

As can be seen from above, the early-warning and regulating control system for dissolved gas supersaturation in flood discharge of a hydraulic dam provided in the embodiments of this specification has the following beneficial technical effects:

(1) **In** the early-warning and regulating control system for dissolved gas supersaturation in flood discharge of a hydraulic dam, multi-scale data that can comprehensively represent static characteristics and dynamic characteristics in a flood discharge process in multiple aspects is acquired by using the flood discharge body digital module, the corresponding flood discharge digital twin is constructed based on the multi-scale data by using the flood discharge digital twin module, and then data mirror interaction is performed on the flood discharge body digital module and the flood discharge digital twin module by using the data interaction prediction module, to ensure that real-time dynamic digital mirroring, data interaction, and digital synchronization between a real-world body and a digital twin, and ensure that the flood discharge digital twin and the real-world body have the same structure, manner, process, and result, so that structure twin representation, manner twin representation, process twin representation, and result twin representation of the real-world body in a flood discharge process of a dam can be implemented based on the flood discharge digital twin. **In** this way, the gas supersaturation prediction model determined based on the flood discharge digital twin is mapped into the body of the flood discharge process, which also has corresponding practical significance. The intelligent prediction unit can implement accurate and effective prediction of a dissolved gas supersaturation status in the downstream basin in the real-world body according to the gas supersaturation prediction model.

(2) Early-warning information is generated according to the dissolved gas supersaturation status predicted by the intelligent prediction unit, and protective regulating is performed on aquatic life in the downstream basin based on the tolerance relationship function, so that the impact of gas supersaturation in a flood discharge process on downstream basin ecology is reduced as much as possible, thereby implementing an effective early warning.

**In** the early-warning and regulating control system for dissolved gas supersaturation in flood discharge of a hydraulic dam, learning and training are performed with the multi-dimensional physical and chemical property data as training data and a tolerance relationship function between an aquatic life tolerance zone and a gas supersaturation degree is determined by using the machine learning unit, so that corresponding tolerance zones for various fishes on different gas supersaturation degrees are accurately determined. The early-warning regulating unit determines an optimal tolerance zone for the target fish by using the tolerance relationship function and according to the dissolved gas supersaturation status predicted by the intelligent prediction unit, and releases a biological guidance signal to guide the target fish to dive or rise to the optimal tolerance zone. **In** this way, before a gas supersaturation degree in a downstream water body is changed, various fishes in the water body are guided in advance to enable them to enter corresponding optimal tolerance zones in advance, so that a severe result that fishes suffer from diseases or even die due to changes in supersaturation concentrations of gas dissolved in a water body caused by flood discharge can be avoided.

(3) When the data interaction unit constructs the gas supersaturation prediction model based on the flood discharge digital twin, the gas supersaturation degrees at the plurality of key cross-sections measured by the plurality of cross-sectional observation apparatuses are compared with the corresponding gas supersaturation degree prediction values, and the gas supersaturation prediction model is updated and iterated according to differences between the measured gas supersaturation degrees and the gas supersaturation degree prediction values, thereby improving the on-way prediction accuracy of gas supersaturation of the intelligent prediction unit by using the gas supersaturation prediction model, and ensuring real-time data interaction between a real-world body and a digital twin and high-accuracy mirror mapping, so that the effectiveness and stability of the operation of the entire system can be ensured.

## BRIEF DESCRIPTION OF THE DRAWING

The features and advantages of this specification will be more clearly understood by referring to the accompanying drawings, which are schematic and should not be construed as limiting this specification in any way. In the accompanying drawings:

FIG. 1 is a schematic diagram of an early-warning and regulating control system for dissolved gas supersaturation in flood discharge of a hydraulic dam according to one or more optional embodiments of this specification;

FIG. 2 is a schematic diagram of a basin physical and chemical monitoring unit in an early-warning and regulating control system for dissolved gas supersaturation in flood discharge of a hydraulic dam according to one or more optional embodiments of this specification;

FIG. 3 is a schematic diagram of a method for constructing a gas supersaturation prediction model by using a data interaction unit in an early-warning and regulating control system for dissolved gas supersaturation in flood discharge of a hydraulic dam according to one or more optional embodiments of this specification;

FIG. 4 is a schematic diagram of the principle of an early-warning and regulating control system for dissolved gas supersaturation in flood discharge of a hydraulic dam according to one or more optional embodiments of this specification;

FIG. 5 is a schematic diagram of an exemplary research basin; and

FIG. 6 is a schematic effect diagram after early warning processing by using an early-warning and regulating control system for dissolved gas supersaturation in flood discharge of a hydraulic dam according to an embodiment of this specification.

## DETAILED DESCRIPTION

To make the objectives, technical solutions, and advantages of the embodiments of this specification clearer, the following clearly and completely describes the technical solutions in embodiments of this specification with reference to the accompanying drawings in embodiments of this specification. Apparently, the described embodiments are some rather than all of the embodiments of this specification. All other embodiments obtained by persons skilled in the art based on the embodiments of this specification without creative efforts shall fall within the protection scope of this specification.

Large-scale water conservancy and hydropower projects may be used for power supply, irrigation, flood control, flood discharge, resistance to extreme floods, and the like. However, water conservancy projects may cause some adverse impacts in an operation process. In a flood discharge process of water discharge structures of high dams, gas is mixed into water flow, resulting in supersaturation of total dissolved gas in water, and causing some harms to an aquatic ecological environment. As water flows downstream, supersaturated gas dissipates slowly, and the saturation of gas remains high in a water body over a very long distance for a very long time. A formation process of supersaturation of gas dissolved in a water body is very complex, and is affected by various factors such as temperature, water depth, pressure, gas volume, and bubble size distribution.

Supersaturation of gas dissolved in a water body causes multiple hazards, for example, corrosion to concrete on the surface of downstream buildings, resulting in certain economic loss and increasing the maintenance load of workers. Supersaturation of gas dissolved in a water body causes damage to downstream ecological environment, resulting in diseases in some aquatic creatures, for example, gas bubble disease in fishes causes large-scale deaths. Research shows that fishes in a water body with a high gas supersaturation degree usually exhibit obvious symptoms of gas bubble disease within one hour to two hours. Therefore, it is important to provide an early warning about key factors such as supersaturation of gas dissolved in a water body in a flood discharge process of high dams to maintain the health of aquatic ecological environment.

The current research on a gas supersaturation phenomenon that occurs in a flood discharge process of high dams mainly focuses on the impacts of supersaturated gas on downstream fishes. Existing technical measures are mainly aimed at promoting the release of supersaturated gas and mitigating the phenomenon of gas supersaturation. The task of real-time monitoring of a gas saturation degree in a flood discharge process of high dams is very complex because various parameters change dynamically in real time in the flood discharge process of high dams and have obvious uncertainties. Researches on the dynamic real-time early warning of supersaturated gas dissolved in a water body are especially limited, and there is no dynamic interaction between an actual condition and a prediction and simulation technology. Therefore, it is difficult to implement dynamic simulation, real-time early warning, and intelligent decision among projects, water bodies, gases, and living creatures.

In view of the foregoing problems, an objective of the technical solution in this specification lies in providing a digital twin dynamic early warning for a supersaturated state of gas dissolved in a water body in a flood discharge process of high dams, and negative feedback adjustment is performed according to an actual gas supersaturation degree in a downstream basin, to implement real-time prediction, calibration, and correction of a gas supersaturation parameter in a water body, so that timely effective measures can be employed in advance at key cross-sections, thereby improving the dispatching and operation benefits of buildings like high dams, and protecting downstream aquatic ecological environment.

The technical solutions of this specification are described below with reference to specific embodiments.

An embodiment of this specification provides an early-warning and regulating control system for dissolved gas supersaturation in flood discharge of a hydraulic dam.

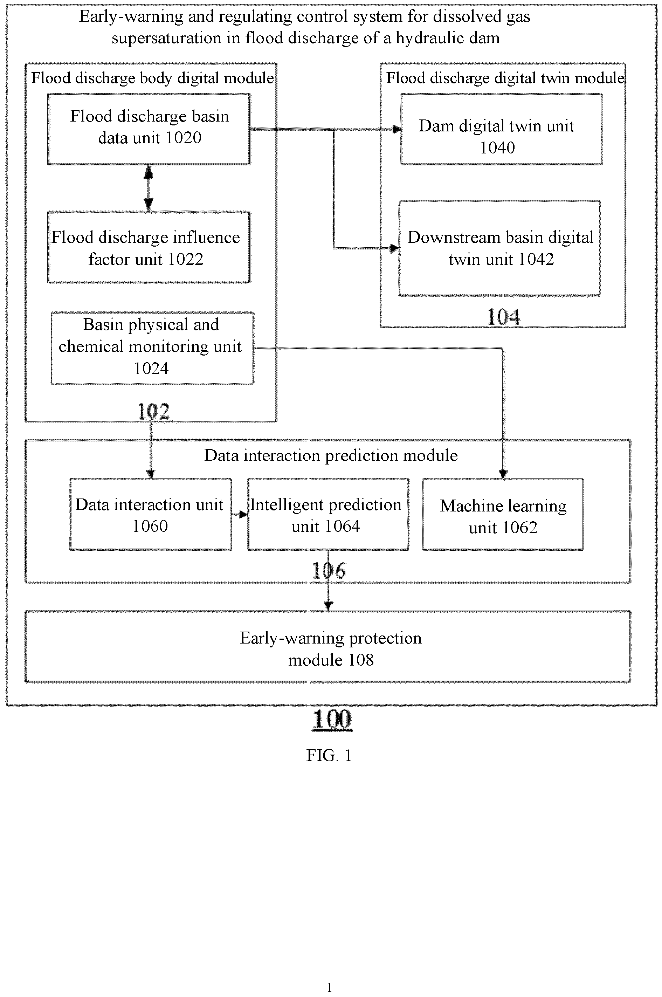

As shown in FIG. 1, the early-warning and regulating control system 100 for dissolved gas supersaturation in flood discharge of a hydraulic dam provided in one or more embodiments of this specification includes a flood discharge body digital module 102, a flood discharge digital twin module 104, a data interaction prediction module 106, and an early-warning protection module 108.

The flood discharge body digital module 102 is configured to acquire multi-scale data related to a flood discharge process of a target dam and includes a flood discharge basin data unit 1020, a flood discharge influence factor unit 1022, and a basin physical and chemical monitoring unit 1024.

The flood discharge basin data unit 1020 is configured to acquire real basin data involved in flood discharge of the target dam, the real basin data including topographical data, mainstream tributary confluence data, mainstream tributary flow data, and obstacle data of a downstream basin of the target dam and basic engineering data of the target dam.

The basic engineering data may include basic data of a reservoir dam such as an outer form, internal orifice and conduit structure, and detailed unit equipment of a hydroelectric power station.

The flood discharge influence factor unit 1022 is configured to determine influence factor data related to the flood discharge process of the target dam, the influence factor data including a flood discharge scheduling scheme factor, an environmental factor, and a water quality physical and chemical parameter factor.

The basin physical and chemical monitoring unit 1024 is configured to detect multi-dimensional physical and chemical property data of a water body in the downstream basin of the target dam.

The multi-scale data includes the real basin data, the influence factor data, and the multi-dimensional physical and chemical property data.

The flood discharge digital twin module 104 is configured to construct a flood discharge digital twin corresponding to the flood discharge process of the target dam according to the multi-scale data and includes a dam digital twin unit 1040 and a downstream basin digital twin unit 1042.

The dam digital twin unit 1040 is configured to construct a dam digital twin according to the basic engineering data and the flood discharge scheduling scheme factor.

The downstream basin digital twin unit 1042 is configured to construct a downstream basin digital twin according to the topographical data, the mainstream tributary confluence data, the mainstream tributary flow data, and the obstacle data of the downstream basin.

The flood discharge digital twin includes the dam digital twin and the downstream basin digital twin.

The data interaction prediction module 106 is configured to perform data mirror interaction on the flood discharge body digital module 102 and the flood discharge digital twin module 104 and predict a dissolved gas supersaturation status based on the flood discharge digital twin and includes a data interaction unit 1060, a machine learning unit 1062, and an intelligent prediction unit 1064.

The data interaction unit 1060 is configured to receive, store, and process the multi-scale data, perform real-time digital synchronization on the flood discharge digital twin according to the multi-scale data, and construct a gas supersaturation prediction model based on the flood discharge digital twin.

The machine learning unit 1062 is configured to perform learning and training with the multi-dimensional physical and chemical property data as training data and determine a tolerance relationship function between an aquatic life tolerance zone and a gas supersaturation degree.

The intelligent prediction unit 1064 is configured to predict a dissolved gas supersaturation status in the downstream basin by using the gas supersaturation prediction model and includes a saturation degree prediction module and a saturation attenuation prediction module.

The early-warning protection module 108 is configured to generate early-warning information according to the dissolved gas supersaturation status predicted by the intelligent prediction unit 1064 and perform protective regulating on aquatic life in the downstream basin based on the tolerance relationship function.

In the early-warning and regulating control system 100 for dissolved gas supersaturation in flood discharge of a hydraulic dam, multi-scale data that can comprehensively represent static characteristics and dynamic characteristics in a flood discharge process in multiple aspects is acquired by using the flood discharge body digital module 102, the corresponding flood discharge digital twin is constructed based on the multi-scale data by using the flood discharge digital twin module 104, and then data mirror interaction is performed on the flood discharge body digital module 102 and the flood discharge digital twin module 104 by using the data interaction prediction module, to ensure that real-time dynamic digital mirroring, data interaction, and digital synchronization between a real-world body and a digital twin, and ensure that the flood discharge digital twin and the real-world body have the same structure, manner, process, and result, so that structure twin representation, manner twin representation, process twin representation, and result twin representation of the real-world body in a flood discharge process of a dam can be implemented based on the flood discharge digital twin. In this way, the gas supersaturation prediction model determined based on the flood discharge digital twin is mapped into the body of the flood discharge process, which also has corresponding practical significance. The intelligent prediction unit 1064 can implement accurate and effective prediction of a dissolved gas supersaturation status in the downstream basin in the real-world body according to the gas supersaturation prediction model.

Early-warning information is generated according to the dissolved gas supersaturation status predicted by the intelligent prediction unit 1064, and protective regulating is performed on aquatic life in the downstream basin based on the tolerance relationship function, so that the impact of gas supersaturation in a flood discharge process on downstream basin ecology is reduced as much as possible, thereby implementing an effective early warning.

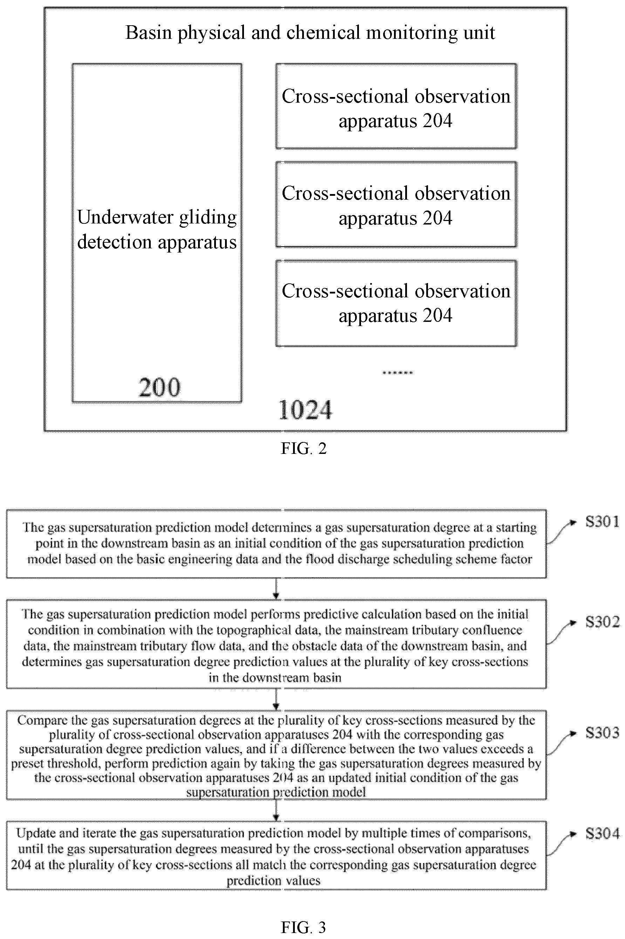

As shown in FIG. 2, in the early-warning and regulating control system 100 for dissolved gas supersaturation in flood discharge of a hydraulic dam according to one or more optional embodiments of this specification, the basin physical and chemical monitoring unit 1024 includes an underwater gliding detection apparatus 200 and a plurality of cross-sectional observation apparatuses 204.

The underwater gliding detection apparatus 200 is configured to detect fish living information and supersaturated gas concentrations at different detection positions and different water depths in the downstream basin and includes a bionic gliding body and an ultrasonic sensor, an underwater imager, and a water quality multi-parameter analyzer that are carried on the bionic gliding body.

The plurality of cross-sectional observation apparatuses 204 are disposed at a plurality of key cross-sections in the downstream basin and are configured to measure gas supersaturation degrees corresponding to the key cross-sections.

The ultrasonic sensor is configured to detect various fishes in the downstream basin, the underwater imager is configured to capture, recognize, and determine living behavior data of the various fishes, and the water quality multi-parameter analyzer is configured to monitor and analyze supersaturated gas concentration data, water temperature data, and water depth data in a current water body.

The underwater gliding detection apparatus 200 performs detection at different positions and different depths in the downstream basin. **In** some optional embodiments, a vertical movement trajectory of the underwater gliding detection apparatus 200 in the water body is:

$$Z = A sin(\omega x + \varphi) + b$$

where $Z$ represents a movement vertical depth of the underwater gliding detection apparatus in the water body. $A$ is a vertical extension coefficient. Optionally, a value range of the vertical extension coefficient may be set from 1.5 to 9.5. $x$ represents a monitoring position. $\omega, \varphi$ are flow direction monitoring coefficients. A value range of $\omega$ may be set from -2.0 to 2.0. A value range of $\varphi$ may be set from $-2\pi$ to $2\pi$. $b$ is an uncertainty coefficient. The uncertainty coefficient may be flexibly set according to a detection depth. Generally, a value range of the uncertainty coefficient is from -50 to 50.

As shown in FIG. 3, in the early-warning and regulating control system 100 for dissolved gas supersaturation in flood discharge of a hydraulic dam according to one or more optional embodiments of this specification, the data interaction unit 1060 is configured to construct the gas supersaturation prediction model based on the flood discharge digital twin by a method including the following steps:

S301: The gas supersaturation prediction model determines a gas supersaturation degree at a starting point in the downstream basin as an initial condition of the gas supersaturation prediction model based on the basic engineering data and the flood discharge scheduling scheme factor.

S302: The gas supersaturation prediction model performs predictive calculation based on the initial condition in combination with the topographical data, the mainstream tributary confluence data, the mainstream tributary flow data, and the obstacle data of the downstream basin, and determines gas supersaturation degree prediction values at the plurality of key cross-sections in the downstream basin.

S303: Compare the gas supersaturation degrees at the plurality of key cross-sections measured by the plurality of cross-sectional observation apparatuses 204 with the corresponding gas supersaturation degree prediction values, and if a difference between the two values exceeds a preset threshold, perform prediction again by taking the gas supersaturation degrees measured by the cross-sectional observation apparatuses 204 as an updated initial condition of the gas supersaturation prediction model.

S304: Update and iterate the gas supersaturation prediction model by multiple times of comparisons, until the gas supersaturation degrees measured by the cross-sectional observation apparatuses 204 at the plurality of key cross-sections all match the corresponding gas supersaturation degree prediction values.

When the data interaction unit 1060 constructs the gas supersaturation prediction model based on the flood discharge digital twin, the gas supersaturation degrees at the plurality of key cross-sections measured by the plurality of cross-sectional observation apparatuses 204 are compared with the corresponding gas supersaturation degree prediction values, and the gas supersaturation prediction model is updated and iterated according to differences between the measured gas supersaturation degrees and the gas supersaturation degree prediction values, thereby improving the on-way prediction accuracy of gas supersaturation of the intelligent prediction unit 1064 by using the gas supersaturation prediction model, and ensuring real-time data interaction between a real-world body and a digital twin and high-accuracy mirror mapping, so that the effectiveness and stability of the operation of the entire system can be ensured.

**In** the early-warning and regulating control system 100 for dissolved gas supersaturation in flood discharge of a hydraulic dam according to one or more optional embodiments of this specification, the saturation degree prediction module is configured to predict the gas supersaturation degree at the starting point in the downstream basin by the following formula:

$$G = 0.5 \frac{\Delta P_d}{P_0} \beta_1 \beta_2 e^{h_d{}^{0.5}}$$

where $G$ represents the gas supersaturation degree, $\Delta P_d$ represents an average relative pressure of the downstream basin, $P_0$ represents a water body initial pressure, $\beta_1$ represents a flood discharge scheduling scheme coefficient, $\beta_2$ represents a correction coefficient, and $h_d$ represents a local water depth in the downstream basin.

In the early-warning and regulating control system 100 for dissolved gas supersaturation in flood discharge of a hydraulic dam according to one or more optional embodiments of this specification, the saturation attenuation prediction module is configured to predict supersaturated gas release coefficients at the plurality of key cross-sections by the following formula:

$$k_{i+1} = k_i \left( \tau \sqrt{\frac{\Psi_t u_i}{h}} + \xi(\phi_i - 1)\frac{Q}{h^2 u_i} \right),$$

where $k_i$, $k_{i+1}$ respectively represent supersaturated gas release coefficients at an $i_{th}$ key cross-section and an $(i+1)_{th}$ key cross-section, $\tau$ represents a gas release correction coefficient, $\Psi_t$ represents a gas diffusion coefficient, and $u_i$ represents an average flow rate at the $i_{th}$ key cross-section, $h$ represents a cross-sectional average water depth, $Q$ represents a cross-sectional average flow, and $\phi_i$ represents a mainstream tributary confluence coefficient.

In the early-warning and regulating control system 100 for dissolved gas supersaturation in flood discharge of a hydraulic dam according to one or more optional embodiments of this specification, the tolerance relationship function between an aquatic life tolerance zone and a gas supersaturation degree determined by the machine learning unit 1062 is:

$$F = (v, s, G, T, H),$$

where $F$ represents the tolerance relationship function, $v$ represents an average swimming speed of target fish, $s$ represents an average body length of the target fish, $G$ represents a gas supersaturation degree at a position where the target fish is located, $T$ represents a water body temperature of the tolerance zone, and $H$ represents a water body depth of the tolerance zone.

The tolerance relationship function is used for describing depths of appropriate tolerance zones corresponding to fishes on different gas saturation degrees. In the early-warning and regulating control system for dissolved gas supersaturation in flood discharge of a hydraulic dam, learning and training are performed with the multi-dimensional physical and chemical property data as training data and a tolerance relationship function between an aquatic life tolerance zone and a gas supersaturation degree may be determined by using the machine learning unit 1062, so that corresponding tolerance zones for various fishes on different gas supersaturation degrees are accurately determined.

In some optional embodiments, the early-warning protection module 108 includes an early-warning regulating unit. The early-warning regulating unit is configured to determine an optimal tolerance zone for the target fish by using the tolerance relationship function and according to the dissolved gas supersaturation status predicted by the intelligent prediction unit 1064, and release a biological guidance signal to guide the target fish to dive or rise to the optimal tolerance zone.

The early-warning regulating unit determines an optimal tolerance zone for the target fish by using the tolerance relationship function and according to the dissolved gas supersaturation status predicted by the intelligent prediction unit 1064 and releases a biological guidance signal to guide the target fish to dive or rise to the optimal tolerance zone. In this way, before a gas supersaturation degree in a downstream water body is changed, various fishes in the water body are guided in advance to enable them to enter corresponding optimal tolerance zones in advance, so that a severe result that fishes suffer from diseases or even die due to changes in supersaturation concentrations of gas dissolved in a water body caused by flood discharge can be avoided.

In one or more optional embodiments, the early-warning protection module 108 further includes an announcement unit. The announcement unit is configured to generate the early-warning information according to the predicted dissolved gas supersaturation status and announce the early-warning information. The announcement unit is further configured to generate ecological optimized regulating information, mainstream tributary adjustment information, and aquacultural adjustment information corresponding to the early-warning information.

Early-warning information is generated according to the dissolved gas supersaturation status predicted by the intelligent prediction unit 1064, and protective regulating is performed on aquatic life in the downstream basin based on the tolerance relationship function, so that the impact of gas supersaturation in a flood discharge process on downstream basin ecology is reduced as much as possible, thereby implementing an effective early warning.

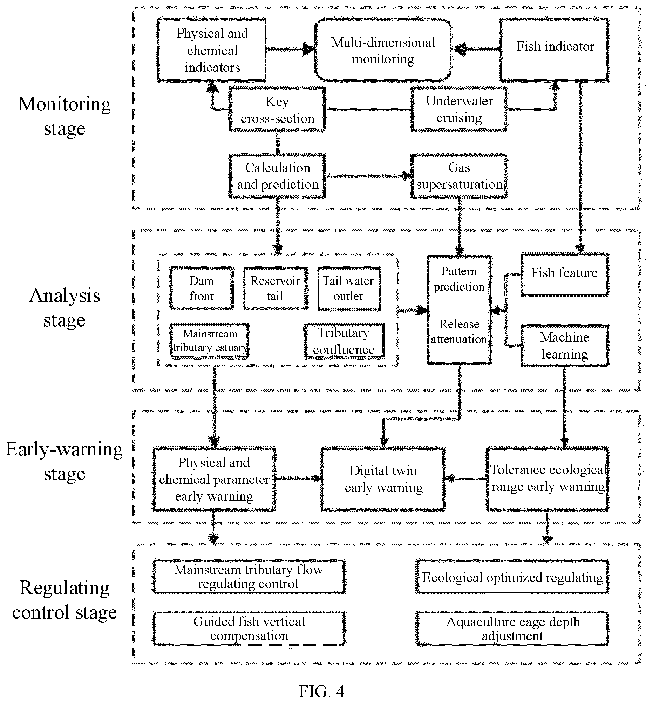

FIG. 4 is a core principle diagram of implementing early-warning and regulating control of gas supersaturation by the early-warning and regulating control system 100 for dissolved gas supersaturation in flood discharge of a hydraulic dam according to one or more optional embodiments of this specification. A process of the early-warning and regulating control of gas supersaturation by the system includes a monitoring stage, an analysis stage, an early-warning stage, and a regulating control stage.

In the monitoring stage, the flood discharge body digital module 102 performs multi-dimensional monitoring on a flood discharge process. By using the underwater gliding detection apparatus 200 in the basin physical and chemical monitoring unit 1024 cruises underwater to acquire life information of various underwater fishes as fish indicators. A plurality of key cross-sections are monitored by using the plurality of cross-sectional observation apparatuses 204, to acquire physical and chemical indicators including the gas supersaturation degrees in the water body at the plurality of key cross-sections. The plurality of key cross-sections may include water body cross-sections at positions such as the front of the dam, the end of the reservoir, the tailwater outlet, a downstream main stream section, tributary estuary, and tributary confluence of hydraulic work.

In the analysis stage, the data interaction prediction module 106 performs calculation and prediction based on results of the multi-dimensional monitoring in the monitoring stage. The data interaction unit 1060 performs real-time digital synchronization on the flood discharge digital twin according to the multi-scale data, and constructs a gas supersaturation prediction model based on the flood discharge digital twin.

The machine learning unit 1062 records physical and chemical indicator data and corresponding fish indicator data to perform machine learning for behavioral features of fishes, and establishes a tolerance relationship function for predicting tolerance zones and gas supersaturation degrees of corresponding fishes. The physical and chemical indicator data includes data such as water depth and water temperature. The fish indicator data includes the body type, age, size, species of fishes, tolerance behavior of fishes, and the like.

The intelligent prediction unit 1064 is configured to predict a dissolved gas supersaturation status in the downstream basin by using the gas supersaturation prediction model and includes the gas supersaturation degrees at the key cross-sections and a release attenuation status of supersaturated gas in the downstream basin.

In the early-warning stage, the early-warning protection module 108 provides a physical and chemical parameter early warning for the flood discharge digital twin according to the physical and chemical indicators at the plurality of key cross-sections in an analysis and prediction result in the analysis stage. A tolerance ecological range early warning is provided for the flood discharge digital twin according to the tolerance relationship function established in the machine learning unit 1062 in the analysis and prediction result in the analysis stage. A digital twin early warning is provided for the flood discharge digital twin according to the gas supersaturation degree and the release attenuation status of supersaturated gas in the analysis and prediction result in the analysis stage.

In the regulating control stage, the early-warning regulating unit in the early-warning protection module guides various fishes in the downstream basin to implement the guided vertical compensation for fish. The announcement unit in the early-warning protection module generates ecological optimized regulating information, mainstream tributary adjustment information, and aquacultural adjustment information corresponding to the early-warning information, to correspondingly implement ecological optimized regulating, mainstream tributary flow regulating control, and aquaculture cage depth adjustment.

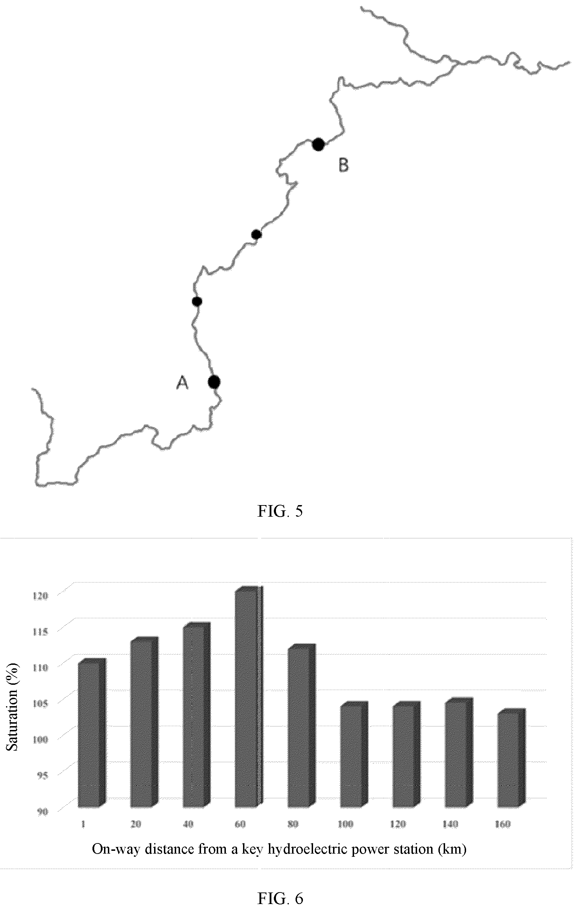

FIG. 5 is a schematic diagram of an exemplary research basin. The research basin is a river section of an upstream cascade hydroelectric power station of the basin and has a total length of approximately 156 km. Hydroelectric power station A is provided with seven surface outlets for flood discharge and eight deep outlets for flood discharge. A water cushion pool and a subsidiary dam are provided behind the dam. A total of four flood discharge tunnels are arranged on the left and right banks. Hydroelectric power station B is the last step of cascade hydropower stations. The discharge structure is formed by 10 middle outlets and 12 surface outlets.

Two cascade hydroelectric power stations and the basin between the stations is a real-world body, including basic data of reservoir dams such as outer forms, internal orifice, and conduit structures, and detailed unit equipments of the hydroelectric power stations; including topographical data of the basin between the hydroelectric power stations, mainstream tributary confluence data, mainstream tributary flow data of the basin, and obstacle data of the basin; including data such as a hydroelectric power station scheduling scheme, a surrounding air environment, and physical and chemical parameters of a water body; and further including an established measuring point track of an underwater glider, fish behavior data obtained through cruising monitoring of the water body in the basin, and the like.

A three-dimensional reservoir dam numerical model that is the same as a multi-dimensional real-world body is established by using data such as basic data of the reservoir dams, scheduling flood discharge data, environmental factors, and water quality factors, to represent three-dimensional geometric characteristics of the real-world body. Data such as upstream and downstream boundary conditions and unit operation manners represents operation process characteristics of the real-world body. Data such as the surrounding environment and water quality represents operation result characteristics of the real-world body. The flood discharge digital twin corresponding to the real-world body is constructed by using the foregoing method.

A downstream basin digital twin that is the same as the multi-dimensional real-world body is established by using data such as the topographical data of the downstream basin, the mainstream tributary confluence data of the downstream basin, the mainstream tributary flow data of the downstream basin, and obstacles of the downstream basin. A gas supersaturation concentration parameter of a starting cross-section is determined through the scheduling flood discharge manner twin of the reservoir dam, and is inputted into a two-dimensional basin digital twin as an initial condition to calculate and simulate on-way gas supersaturation concentrations and supersaturated gas release coefficients at key cross-sections, to implement a release attenuation process twin. A gas supersaturation prediction model for a high-dam reservoir flood discharge digital twin is constructed by using the foregoing method.

A mathematical model having the same structure, manner, process, and result as the real-world body is constructed by using a three-dimensional high-dam reservoir flood discharge digital twin and the two-dimensional basin digital twin, to implement the structure twin representation, manner twin representation, process twin representation, and result twin representation of the multi-dimensional real-world body.

According to the prediction results, the early-warning protection module can implement optimized decision-making for a plurality of target requirements, such as ecological optimized regulating and releasing a biological signal by a bionic underwater glider to guide fishes to perform depth compensation, which could provide solutions for actual projects, thereby reducing the damage caused by supersaturated gas.

Results show that the mortality rate of fishes due to supersaturation of gas dissolved in a water body without an early warning may reach 83%. As shown in FIG. 6, after prediction, corresponding measures are employed in time at key cross-sections in a water area 100 km away from a key hydroelectric power station, to reduce gas supersaturation below 110%. In addition, the underwater glider releases a biological signal in a key fish habitat region to guide fishes to avoid supersaturated gas, to complete vertical diving water depth compensation of different fishes. For example, a vertical diving water compensation depth of Coreius guichenoti at key cross-section is two meters, and a vertical diving water compensation depth of Schizothorax prenanti is one meter. No Coreius guichenoti is found at the key cross-section B, and a vertical diving water compensation depth of Schizothorax prenanti is two meters. After an early warning and fish guidance and protection, it is measured at cross-sections in the downstream basin that the mortality rates of fishes are reduced to 51% to 64%, thereby clearly mitigating damage to fishes due to gas bubble disease.

The systems, modules, and units described in the above embodiments may be specifically implemented by a computer chip or entity, or by a product with some functionality. An exemplary implementation device is a computer. Specifically, the computer may be, for example, a personal computer, a laptop computer, a cellular phone, a camera phone, a smart phone, a personal digital assistant, a media player, a navigation device, an email device, a gaming console, a tablet computer, a wearable device, or a combination of any of these devices.

For the convenience of description, the above apparatus is described in terms of functions divided into various units separately. Certainly, the functions of each unit can be implemented in the same or a plurality of pieces of software and/or hardware when implementing the present application.

A person skilled in the art should understand that the embodiments of this specification may be provided as a method, a system or a computer program product. Therefore, this specification may use a form of hardware only embodiments, software only embodiments, or embodiments with a combination of software and hardware. Moreover, this specification may use a form of a computer program product that is implemented on one or more computer-usable storage media (including but not limited to a disk memory, a CD-ROM, an optical memory, and the like) that include computer usable program code.

The specification is described with reference to the flowcharts and/or block diagrams of the method, the device (system), and the computer program product according to the embodiments of the specification. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operation procedure are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, the computing device includes one or more processors (CPUs), input/output interfaces, network interfaces, and memory.

The memory may include a form such as a non-permanent memory, a random access memory (RAM) and/or a non-volatile memory such as a read-only memory (ROM) or a flash memory (flash RAM) in a computer-readable medium. The memory is an example of a computer-readable medium.

The computer-readable medium includes a permanent or non-permanent medium and a removable or non-removable medium, and may implement information storage by using any method or technology. The information may be a computer-readable instruction, a data structure, a program module or other data. An example of the storage medium of the computer includes, but is not limited to, a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another storage technology, a compact disc read-only memory (CD-ROM), a digital versatile disc (DVD) or another optical storage, a cassette tape, a tape disk storage or another magnetic storage device or any another non-transmission medium, and may be configured to store information accessible by a computing device. According to the definitions herein, the computer-readable medium does not include a transitory computer-readable medium, for example, a modulated data signal and carrier.

It should be noted that the terms "include", "comprise", or any variation thereof in the present disclosure are intended to cover a non-exclusive inclusion. Therefore, in the context of a process, method, commodity or device that includes a series of elements, the process, method, commodity or device not only includes such elements, but also includes other elements not specified expressly, or may include inherent elements of the process, method, commodity or device. If no more limitations are made, an element limited by "include a/an..." does not exclude other same elements existing in the process, the method, the commodity or the device which includes the element.

A person skilled in the art should understand that the embodiments of the present application may be provided as a method, a system or a computer program product. Therefore, the present application may use a form of hardware only embodiments, software only embodiments, or embodiments with a combination of software and hardware. Moreover, the present application may use a form of a computer program product that is implemented on one or more computer-usable storage media (including but not limited to a disk memory, a CD-ROM, an optical memory, and the like) that include computer usable program code.

The present application may be described in the general context of computer-executable instructions executed by a computer, such as a program module. Generally, program modules include routines, programs, objects, components, data structures, and the like that perform a particular task or implement a particular abstract data type. The present application may also be practiced in distributed computing environments in which tasks are performed by remote processing devices that are connected via a communication network. In a distributed computing environment, program modules may be located in local and remote computer storage media including storage devices.

It needs to be noted that various embodiments in the specification are described in a progressive manner. The same or similar parts between the embodiments may be referenced to each other. In each embodiment, the portion that is different from other embodiments is concentrated and described. In particular, with respect to system embodiments, since them are substantially similar to the method embodiments, brief descriptions are given. The related portions may be referenced to the description of the portions in the method embodiments.

## Claims

1. An early-warning and regulating control system for dissolved gas supersaturation in flood discharge of a hydraulic dam, comprising a flood discharge body digital module, a flood discharge digital twin module, a data interaction prediction module, and an early-warning protection module, wherein

   the flood discharge body digital module is configured to acquire multi-scale data related to a flood discharge process of a target dam and comprises a flood discharge basin data unit, a flood discharge influence factor unit, and a basin physical and chemical monitoring unit,
   wherein the flood discharge basin data unit is configured to acquire real basin data involved in flood discharge of the target dam, the real basin data comprising topographical data, mainstream tributary confluence data, mainstream tributary flow data, and obstacle data of a downstream basin of the target dam and basic engineering data of the target dam;
   the flood discharge influence factor unit is configured to determine influence factor data related to the flood discharge process of the target dam, the influence factor data comprising a flood discharge scheduling scheme factor, an environmental factor, and a water quality physical and chemical parameter factor;

the basin physical and chemical monitoring unit is configured to detect multi-dimensional physical and chemical property data of a water body in the downstream basin of the target dam; and

the multi-scale data comprises the real basin data, the influence factor data, and the multi-dimensional physical and chemical property data;

the flood discharge digital twin module is configured to construct a flood discharge digital twin corresponding to the flood discharge process of the target dam according to the multi-scale data and comprises a dam digital twin unit and a downstream basin digital twin unit;

wherein the dam digital twin unit is configured to construct a dam digital twin according to the basic engineering data and the flood discharge scheduling scheme factor;

the downstream basin digital twin unit is configured to construct a downstream basin digital twin according to the topographical data, the mainstream tributary confluence data, the mainstream tributary flow data, and the obstacle data of the downstream basin; and

the flood discharge digital twin comprises the dam digital twin and the downstream basin digital twin;

the data interaction prediction module is configured to perform data mirror interaction on the flood discharge body digital module and the flood discharge digital twin module and predict a dissolved gas supersaturation status based on the flood discharge digital twin and comprises a data interaction unit, a machine learning unit, and an intelligent prediction unit,

wherein the data interaction unit is configured to receive, store, and process the multi-scale data, perform real-time digital synchronization on the flood discharge digital twin according to the multi-scale data, and construct a gas supersaturation prediction model based on the flood discharge digital twin;

the machine learning unit is configured to perform learning and training with the multi-dimensional physical and chemical property data as training data and determine a tolerance relationship function between an aquatic life tolerance zone and a gas supersaturation degree, wherein the tolerance relationship function is:

$$F = (v, s, G, T, H),$$

wherein $F$ represents the tolerance relationship function, $v$ represents an average swimming speed of target fish, $s$ represents an average body length of the target fish, $G$ represents a gas supersaturation degree at a position where the target fish is located, $T$ represents a water body temperature of the tolerance zone, and $H$ represents a water body depth of the tolerance zone; and

the intelligent prediction unit is configured to predict a dissolved gas supersaturation status in the downstream basin by using the gas supersaturation prediction model and comprises a saturation degree prediction module and a saturation attenuation prediction module; and

the early-warning protection module is configured to generate early-warning information according to the dissolved gas supersaturation status predicted by the intelligent prediction unit and perform protective regulating on aquatic life in the downstream basin based on the tolerance relationship function,

wherein the early-warning protection module comprises an early-warning regulating unit, and the early-warning regulating unit is configured to determine an optimal tolerance zone for the target fish by using the tolerance relationship function and according to the dissolved gas supersaturation status predicted by the intelligent prediction unit, and release a biological guidance signal to guide the target fish to dive or rise to the optimal tolerance zone.

2. The system according to claim 1, wherein the basin physical and chemical monitoring unit comprises an underwater gliding detection apparatus and a plurality of cross-sectional observation apparatuses;

the underwater gliding detection apparatus is configured to detect fish living information and supersaturated gas concentrations at different detection positions and different water depths in the downstream basin and comprises a bionic gliding body and an ultrasonic sensor, an underwater imager, and a water quality multi-parameter analyzer that are carried on the bionic gliding body;

the plurality of cross-sectional observation apparatuses are disposed at a plurality of key cross-sections in the downstream basin, and are configured to measure gas supersaturation degrees corresponding to the key cross-sections; and

the ultrasonic sensor is configured to detect various fishes in the downstream basin, the underwater imager is configured to capture, recognize, and determine living behavior data of the various fishes, and the water quality multi-parameter analyzer is configured to monitor and analyze supersaturated gas concentration data, water temperature data, and water depth data in a current water body.

3. The system according to claim 2, wherein a vertical movement trajectory of the underwater gliding detection apparatus in the water body is:

$$Z = A sin(\omega x + \varphi) + b$$,

wherein $Z$ represents a movement vertical depth of the underwater gliding detection apparatus in the water body, $A$ is a vertical extension coefficient, $x$ represents a monitoring position, $\omega$, $\varphi$ are flow direction monitoring coefficients, and $b$ is an uncertainty coefficient.

4. The system according to claim 2, wherein the data interaction unit is configured to construct the gas supersaturation prediction model based on the flood discharge digital twin by a method comprising the following steps:

determining, by the gas supersaturation prediction model, a gas supersaturation degree at a starting point in the downstream basin as an initial condition of the gas supersaturation prediction model based on the basic engineering data and the flood discharge scheduling scheme factor;
performing, by the gas supersaturation prediction model, predictive calculation based on the initial condition in combination with the topographical data, the mainstream tributary confluence data, the mainstream tributary flow data, and the obstacle data of the downstream basin, and determining gas supersaturation degree prediction values at the plurality of key cross-sections in the downstream basin;
comparing the gas supersaturation degrees at the plurality of key cross-sections measured by the plurality of cross-sectional observation apparatuses with the corresponding gas supersaturation degree prediction values, and if a difference between the two values exceeds a preset threshold, performing prediction again by taking the gas supersaturation degrees measured by the cross-sectional observation apparatuses as an updated initial condition of the gas supersaturation prediction model; and
updating and iterating the gas supersaturation prediction model by multiple times of comparisons, until the gas supersaturation degrees measured by the cross-sectional observation apparatuses at the plurality of key cross-sections all match the corresponding gas supersaturation degree prediction values.

5. The system according to claim 4, wherein the saturation degree prediction module is configured to predict the gas supersaturation degree at the starting point in the downstream basin by the following formula:

$$G = 0.5 \frac{\Delta P_d}{P_0} \beta_1 \beta_2 e^{h_d^{0.5}}$$,

wherein $G$ represents the gas supersaturation degree, $\Delta Pd$ represents an average relative pressure of the downstream basin, $P_0$ represents a water body initial pressure, $\beta_1$ represents a flood discharge scheduling scheme coefficient, $\beta_2$ represents a correction coefficient, and $h_d$ represents a local water depth in the downstream basin.

6. The system according to claim 4, wherein the saturation attenuation prediction module is configured to predict supersaturated gas release coefficients at the plurality of key cross-sections by the following formula:

$$k_{i+1} = k_i \left( \tau \sqrt{\frac{\Psi_t u_i}{h}} + \xi(\phi_i - 1) \frac{Q}{h^2 u_i} \right)$$,

wherein $k_i$, $k_{i+1}$ respectively represent supersaturated gas release coefficients at an $i_{th}$ key cross-section and an $(i + 1)_{th}$ key cross-section, $\tau$ represents a gas release correction coefficient, $\Psi_t$ represents a gas diffusion coefficient, and $u_i$ represents an average flow rate at the $i_{th}$ key cross-section, $h$ represents a cross-sectional average water depth, $Q$ represents a cross-sectional average flow, and $\phi_i$ represents a mainstream tributary confluence coefficient.

7. The system according to claim 1, wherein the early-warning protection module comprises an announcement unit;

the announcement unit is configured to generate the early-warning information according to the predicted dissolved gas supersaturation status and announce the early-warning information; and
the announcement unit is further configured to generate ecological optimized regulating information, mainstream tributary adjustment information, and aquacultural adjustment information corresponding to the early-warning information.

**Patentansprüche**

1.  Frühwarn- und Regelsteuerungssystem zur Kontrolle einer Übersättigung gelöster Gase bei Hochwasserableitung eines Staudamms, umfassend ein Digitalmodul des Hochwasserableitungskörpers, ein digitales Zwillings-Modul der Hochwasserableitung, ein Dateninteraktions- und Vorhersagemodul sowie ein Frühwarn-Schutzmodul, wobei

    das Digitalmodul des Hochwasserableitungskörpers dazu eingerichtet ist, multiskalige Daten im Zusammenhang mit einem Hochwasserableitungsprozess eines Zielstaudamms zu erfassen, und eine Hochwasserableitungsbecken-Dateneinheit, eine Einflussfaktor-Einheit der Hochwasserableitung sowie eine Einheit zur physikalisch-chemischen Überwachung des Beckens umfasst,
    wobei die Hochwasserableitungsbecken-Dateneinheit dazu eingerichtet ist, reale Beckendaten zu erfassen, die an der Hochwasserableitung des Zielstaudamms beteiligt sind, wobei die realen Beckendaten topographische Daten, Zusammenflussdaten von Haupt- und Nebenflüssen, Durchflussdaten von Haupt- und Nebenflüssen sowie Hindernisdaten eines stromabwärtigen Beckens des Zielstaudamms und grundlegende technische Daten des Zielstaudamms umfassen;
    wobei die Einflussfaktor-Einheit der Hochwasserableitung dazu eingerichtet ist, Einflussfaktordaten im Zusammenhang mit dem Hochwasserableitungsprozess des Zielstaudamms zu bestimmen, wobei die Einflussfaktordaten einen Hochwasserableitungs-Einsatzplanungsfaktor, einen Umweltfaktor sowie einen physikalisch-chemischen Wasserqualitätsparameterfaktor umfassen;
    wobei die Einheit zur physikalisch-chemischen Überwachung des Beckens dazu eingerichtet ist, mehrdimensionale physikalische und chemische Eigenschaftsdaten eines Wasserkörpers im stromabwärtigen Becken des Zielstaudamms zu erfassen; und
    wobei die multiskaligen Daten die realen Beckendaten, die Einflussfaktordaten sowie die mehrdimensionalen physikalischen und chemischen Eigenschaftsdaten umfassen;
    wobei das digitale Zwillings-Modul der Hochwasserableitung dazu eingerichtet ist, auf Grundlage der multiskaligen Daten einen dem Hochwasserableitungsprozess des Zielstaudamms entsprechenden digitalen Zwilling der Hochwasserableitung zu konstruieren, und eine digitalen Zwillingseinheit des Staudamms sowie eine stromabwärtige digitale Zwillingseinheit des Beckens umfasst;
    wobei die digitale Zwillingseinheit des Beckens dazu eingerichtet ist, einen digitalen Zwilling des Staudamms auf Grundlage der grundlegenden technischen Daten und des Hochwasserableitungs-Einsatzplanungsfaktors zu konstruieren;
    wobei die stromabwärtige digitale Zwillingseinheit des Beckens dazu eingerichtet ist, einen stromabwärtigen digitalen Zwilling des Beckens auf Grundlage der topographischen Daten, der Zusammenflussdaten von Haupt- und Nebenflüssen, der Durchflussdaten von Haupt- und Nebenflüssen sowie der Hindernisdaten des stromabwärtigen Beckens zu konstruieren; und
    wobei der digitale Zwilling der Hochwasserableitung den digitalen Zwilling des Staudamms und den stromabwärtigen digitalen Zwilling des Beckens umfasst;
    wobei das Dateninteraktions- und Vorhersagemodul dazu eingerichtet ist, eine Daten-Spiegelinteraktion zwischen dem Digitalmodul des Hochwasserableitungskörpers und dem digitalen Zwillingsmodul der Hochwasserableitung durchzuführen und auf Grundlage des digitalen Zwillings der Hochwasserableitung einen Übersättigungszustand gelöster Gase vorherzusagen, und eine Dateninteraktions-Einheit, eine Einheit für maschinelles Lernen sowie eine intelligente Vorhersage-Einheit umfasst,
    wobei die Dateninteraktions-Einheit dazu eingerichtet ist, die multiskaligen Daten zu empfangen, zu speichern und zu verarbeiten, eine Echtzeit-Synchronisierung des digitalen Zwillings der Hochwasserableitung auf Grundlage der multiskaligen Daten durchzuführen und auf Grundlage des digitalen Zwillings der Hochwasserableitung ein Vorhersagemodell für Gasübersättigung zu konstruieren;
    wobei die Einheit für maschinelles Lernen dazu eingerichtet ist, Lern- und Trainingsprozesse unter Verwendung der mehrdimensionalen physikalischen und chemischen Eigenschaftsdaten als Trainingsdaten durchzuführen und eine Toleranz-Beziehungsfunktion zwischen einer Toleranzzone aquatischer Lebensformen und einem Gasübersättigungsgrad zu bestimmen, wobei die Toleranz-Beziehungsfunktion lautet:

$$F = (v, s, G, T, H)$$

wobei *F* die Toleranz-Beziehungsfunktion darstellt, *v* eine durchschnittliche Schwimmgeschwindigkeit eines Zielfisches darstellt, *s* eine durchschnittliche Körperlänge des Zielfisches darstellt, *G* einen Gasübersättigungsgrad an einer Position darstellt, an der sich der Zielfisch befindet, *T* eine Wassertemperatur der Toleranzzone darstellt und *H* eine Wassertiefe der Toleranzzone darstellt; und

wobei die intelligente Vorhersage-Einheit dazu eingerichtet ist, unter Verwendung des Vorhersagemodells für Gasübersättigung einen Übersättigungszustand gelöster Gase im stromabwärtigen Becken vorherzusagen, und ein Modul zur Vorhersage des Übersättigungsgrades sowie ein Modul zur Vorhersage der Übersättigungsabschwächung umfasst; und

wobei das Frühwarn-Schutzmodul dazu eingerichtet ist, auf Grundlage des von der intelligenten Vorhersage-Einheit vorhergesagten Übersättigungszustands gelöster Gase Frühwarninformationen zu erzeugen und eine schützende Regelung aquatischer Lebensformen im stromabwärtigen Becken auf Grundlage der Toleranz-Beziehungsfunktion durchzuführen,

wobei das Frühwarn-Schutzmodul eine Frühwarn-Regelungseinheit umfasst, und wobei die Frühwarn-Regelungseinheit dazu eingerichtet ist, unter Verwendung der Toleranz-Beziehungsfunktion und auf Grundlage des vorhergesagten Übersättigungszustands gelöster Gase eine optimale Toleranzzone für den Zielfisch zu bestimmen und ein biologisches Leitsignal auszugeben, um den Zielfisch zum Abtauchen oder Auftauchen in die optimale Toleranzzone zu führen.

2. System nach Anspruch 1, wobei die Einheit zur physikalisch-chemischen Überwachung des Beckens eine Unterwasser-Gleitdetektionsvorrichtung sowie eine Mehrzahl von Querschnitts-Beobachtungsvorrichtungen umfasst;

wobei die Unterwasser-Gleitdetektionsvorrichtung dazu eingerichtet ist, Informationen zum Fischleben sowie Konzentrationen übersättigter Gase an unterschiedlichen Detektionspositionen und in unterschiedlichen Wassertiefen im stromabwärtigen Becken zu erfassen, und einen bionischen Gleitkörper sowie einen Ultraschallsensor, eine Unterwasserkamera und einen Wasserqualitäts-Mehrparameteranalysator umfasst, die auf dem bionischen Gleitkörper getragen sind; und

wobei die Mehrzahl von Querschnitts-Beobachtungsvorrichtungen an einer Mehrzahl von Schlüsselquerschnitten im stromabwärtigen Becken angeordnet ist und dazu eingerichtet ist, Gasübersättigungsgrade entsprechend den Schlüsselquerschnitten zu messen; und

wobei der Ultraschallsensor dazu eingerichtet ist, verschiedene Fischarten im stromabwärtigen Becken zu detektieren, die Unterwasserkamera dazu eingerichtet ist, Lebensverhaltensdaten der verschiedenen Fischarten aufzunehmen, zu erkennen und zu bestimmen, und der Wasserqualitäts-Mehrparameteranalysator dazu eingerichtet ist, Daten zu übersättigten Gaskonzentrationen, Wassertemperaturdaten und Wassertiefendaten eines aktuellen Wasserkörpers zu überwachen und zu analysieren.

3. System nach Anspruch 2, wobei eine vertikale Bewegungsbahn der Unterwasser-Gleitdetektionsvorrichtung im Wasserkörper wie folgt ist:

$$Z = A sin(\omega x + \varphi) + b$$

wobei *Z* eine vertikale Bewegungstiefe der Unterwasser-Gleitdetektionsvorrichtung im Wasserkörper darstellt, *A* ein vertikaler Ausdehnungskoeffizient ist, *x* eine Überwachungsposition darstellt, *ω, φ* Strömungsrichtungs-Überwachungskoeffizienten sind und *b* ein Unsicherheitskoeffizient ist.

4. System nach Anspruch 2, wobei die Dateninteraktions-Einheit dazu eingerichtet ist, das Vorhersagemodell für Gasübersättigung auf Grundlage des digitalen Zwillings der Hochwasserableitung durch ein Verfahren zu konstruieren, das die folgenden Schritte umfasst:

Bestimmen eines Gasübersättigungsgrades an einem Startpunkt im stromabwärtigen Becken durch das Vorhersagemodell für Gasübersättigung als Anfangsbedingung des Vorhersagemodells für Gasübersättigung auf Grundlage der grundlegenden technischen Daten und des Hochwasserableitungs-Einsatzplanungsfaktors; Durchführen einer prädiktiven Berechnung durch das Vorhersagemodell für Gasübersättigung auf Grundlage der Anfangsbedingung in Kombination mit den topographischen Daten, den Zusammenflussdaten von Haupt- und Nebenflüssen, den Durchflussdaten von Haupt- und Nebenflüssen sowie den Hindernisdaten des stromabwärtigen Beckens, und Bestimmen von Vorhersagewerten für Gasübersättigungsgrade an der Mehrzahl von Schlüsselquerschnitten im stromabwärtigen Becken;

Vergleichen der an der Mehrzahl von Schlüsselquerschnitten gemessenen Gasübersättigungsgrade durch die Mehrzahl von Querschnitts-Beobachtungsvorrichtungen mit den entsprechenden Vorhersagewerten der Gasübersättigungsgrade, und wenn eine Differenz zwischen den beiden Werten einen vorgegebenen Schwellenwert überschreitet, erneutes Durchführen der Vorhersage unter Verwendung der durch die Querschnitts-Beobachtungsvorrichtungen gemessenen Gasübersättigungsgrade als aktualisierte Anfangsbedingung des Vorhersagemodells für Gasübersättigung; und

Aktualisieren und Iterieren des Vorhersagemodells für Gasübersättigung durch mehrfache Vergleiche, bis die an der Mehrzahl von Schlüsselquerschnitten durch die Querschnitts-Beobachtungsvorrichtungen gemessenen Gasübersättigungsgrade sämtlich mit den entsprechenden Vorhersagewerten der Gasübersättigungsgrade übereinstimmen.

5. System nach Anspruch 4, wobei das Modul zur Vorhersage des Übersättigungsgrades dazu eingerichtet ist, den Gasübersättigungsgrad am Startpunkt im stromabwärtigen Becken durch die folgende Formel vorherzusagen:

$$G = 0.5 \frac{\Delta P_d}{P_0} \beta_1 \beta_2 e^{h_d^{0.5}}$$

wobei $G$ den Gasübersättigungsgrad darstellt, $\Delta P_d$ einen durchschnittlichen relativen Druck des stromabwärtigen Beckens darstellt, $P_0$ einen Anfangsdruck des Wasserkörpers darstellt, $\beta_1$ einen Hochwasserableitungs-Einsatzplanungskoeffizienten darstellt, $\beta_2$ einen Korrekturkoeffizienten darstellt und $h_d$ eine lokale Wassertiefe im stromabwärtigen Becken darstellt.

6. System nach Anspruch 4, wobei das Modul zur Vorhersage der Übersättigungsabschwächung dazu eingerichtet ist, Koeffizienten der Freisetzung übersättigter Gase an der Mehrzahl von Schlüsselquerschnitten durch die folgende Formel vorherzusagen:

$$k_{i+1} = k_i \left( \tau \sqrt{\frac{\Psi_t u_i}{h}} + \xi(\phi_i - 1)\frac{Q}{h^2 u_i} \right)$$

wobei $k_i$, $k_{i+1}$ bzw. jeweils Koeffizienten der Freisetzung übersättigter Gase an einem $i$ ten Schlüsselquerschnitt bzw. an einem $i+1$ ten Schlüsselquerschnitt darstellen, $\tau$ einen Gasfreisetzungs-Korrekturkoeffizienten darstellt, $\Psi_t$ einen Gasdiffusionskoeffizienten darstellt, $u_i$ eine durchschnittliche Fließgeschwindigkeit am $i$ ten Schlüsselquerschnitt darstellt, $h$ eine querschnittliche durchschnittliche Wassertiefe darstellt, $Q$ einen querschnittlichen durchschnittlichen Durchfluss darstellt und $\phi_i$ einen Zusammenflusskoeffizienten von Haupt- und Nebenflüssen darstellt.

7. System nach Anspruch 1, wobei das Frühwarn-Schutzmodul eine Bekanntmachungseinheit umfasst;

wobei die Bekanntmachungseinheit dazu eingerichtet ist, auf Grundlage des vorhergesagten Übersättigungszustands gelöster Gase die Frühwarninformationen zu erzeugen und die Frühwarninformationen bekannt zu machen; und

wobei die Bekanntmachungseinheit ferner dazu eingerichtet ist, ökologische optimierte Regelungsinformationen, Anpassungsinformationen für Haupt- und Nebenflüsse sowie Anpassungsinformationen für Aquakultur entsprechend den Frühwarninformationen zu erzeugen.

**Revendications**

1. Système de commande d'alerte précoce et de régulation de sursaturation de gaz dissous lors d'une évacuation de crue d'un barrage hydraulique, comprenant un module numérique de masse d'évacuation de crue, un module de jumeau numérique d'évacuation de crue, un module de prédiction d'interaction de données et un module de protection d'alerte précoce, dans lequel

le module numérique de masse d'évacuation de crue est configuré pour acquérir des données multi-échelles associées à un processus d'évacuation de crue d'un barrage cible et comprend une unité de données de bassin d'évacuation de crue, une unité de facteurs d'influence d'évacuation de crue et une unité de surveillance physique et chimique de bassin,

dans lequel l'unité de données de bassin d'évacuation de crue est configurée pour acquérir des données de bassin réelles impliquées lors d'une évacuation de crue du barrage cible, les données de bassin réelles comprenant des données topographiques, des données de confluence d'affluent de cours d'eau principal, des données d'écoulement d'affluent de cours d'eau principal et des données d'obstacle d'un bassin aval du barrage cible ainsi que des données d'ingénierie de base du barrage cible ;

l'unité de facteurs d'influence d'évacuation de crue est configurée pour déterminer des données de facteurs d'influence associées au processus d'évacuation de crue du barrage cible, les données de facteurs d'influence comprenant un facteur de schéma de planification d'évacuation de crue, un facteur environnemental et un facteur de paramètres physiques et chimiques de qualité d'eau ;

l'unité de surveillance chimique et physique de bassin est configurée pour détecter des données de propriétés physiques et chimiques multidimensionnelles d'une masse d'eau dans le bassin aval du barrage cible ; et

les données multi-échelles comprennent les données de bassin réelles, les données de facteurs d'influence et les données de propriétés physiques et chimiques multidimensionnelles ;

le module de jumeau numérique d'évacuation de crue est configuré pour construire un jumeau numérique d'évacuation de crue correspondant au processus d'évacuation de crue du barrage cible conformément aux données multi-échelles et comprend une unité de jumeau numérique de barrage et une unité de jumeau numérique de bassin aval ;

dans lequel l'unité de jumeau numérique de barrage est configurée pour construire un jumeau numérique de barrage conformément aux données d'ingénierie de base et au facteur de schéma de planification d'évacuation de crue ;

l'unité de jumeau numérique de bassin aval est configurée pour construire un jumeau numérique de bassin aval conformément aux données topographiques, aux données de confluence d'affluent de cours d'eau principal, aux données d'écoulement d'affluent de cours d'eau principal et aux données d'obstacle du bassin aval ; et

le jumeau numérique d'évacuation de crue comprend le jumeau numérique de barrage et le jumeau numérique de bassin aval ;

le module de prédiction d'interaction de données est configuré pour mettre en œuvre une interaction de miroir de données entre le module numérique de masse d'évacuation de crue et le module de jumeau numérique d'évacuation de crue et pour prédire un état de sursaturation de gaz dissous sur la base du jumeau numérique d'évacuation de crue et comprend une unité d'interaction de données, une unité d'apprentissage machine et une unité de prédiction intelligente,

dans lequel l'unité d'interaction de données est configurée pour recevoir, pour mémoriser et pour traiter les données multi-échelles, pour mettre en œuvre une synchronisation numérique en temps réel du jumeau numérique d'évacuation de crue conformément aux données multi-échelles, et pour construire un modèle de prédiction de sursaturation de gaz sur la base du jumeau numérique d'évacuation de crue ;

l'unité d'apprentissage machine est configurée pour mettre en œuvre un apprentissage et un entraînement avec les données de propriétés physiques et chimiques multidimensionnelles en tant que données d'entraînement et pour déterminer une fonction de relation de tolérance entre une zone de tolérance de vie aquatique et un degré de sursaturation de gaz, dans lequel la fonction de relation de tolérance est :

$$F = (v, s, G, T, H),$$

dans laquelle *F* représente la fonction de relation de tolérance, *v* représente une vitesse de nage moyenne d'un poisson cible, *s* représente une longueur corporelle moyenne du poisson cible, *G* représente un degré de sursaturation de gaz à une position à laquelle se trouve le poisson cible, *T* représente une température de masse d'eau de la zone de tolérance, et *H* représente une profondeur de masse d'eau de la zone de tolérance ; et

l'unité de prédiction intelligente est configurée pour prédire un état de sursaturation de gaz dissous dans le bassin aval au moyen du modèle de prédiction de sursaturation de gaz et comprend un module de prédiction de degré de saturation et un module de prédiction d'atténuation de saturation ; et

le module de protection d'alerte précoce est configuré pour générer des informations d'alerte précoce conformément à l'état de sursaturation de gaz dissous prédit par l'unité de prédiction intelligente et pour mettre en œuvre une régulation protectrice de vie aquatique dans le bassin aval sur la base de la fonction de relation de tolérance,

dans lequel le module de protection d'alerte précoce comprend une unité de régulation d'alerte précoce, et l'unité de régulation d'alerte précoce est configurée pour déterminer une zone de tolérance optimale pour le poisson cible au moyen de la fonction de relation de tolérance et conformément à l'état de sursaturation de gaz dissous prédit par l'unité de prédiction intelligente, et pour émettre un signal de guidage biologique pour guider le poisson cible pour qu'il plonge ou monte jusqu'à la zone de tolérance optimale.

2. Système selon la revendication 1, dans lequel l'unité de surveillance physique et chimique de bassin comprend un appareil de détection planeur sous-marin et une pluralité d'appareils d'observation de section transversale ;

l'appareil de détection planeur sous-marin est configuré pour détecter des informations de vie de poissons et des concentrations de gaz sursaturé à différentes positions de détection et à différentes profondeurs d'eau dans le bassin aval et comprend un corps planeur bionique et un capteur ultrasonore, un imageur sous-marin et un analyseur multi-paramètre de qualité d'eau qui sont portés sur le corps planeur bionique ;

les appareils de la pluralité d'appareils d'observation de section transversale sont disposés au niveau d'une pluralité de sections transversales clés dans le bassin aval, et sont configurés pour mesurer des degrés de sursaturation de gaz correspondant aux sections transversales clés ; et

le capteur ultrasonore est configuré pour détecter divers poissons dans le bassin aval, l'imageur sous-marin est configuré pour capturer, pour reconnaître et pour déterminer des données de comportement de vie des divers poissons, et l'analyseur multi-paramètre de qualité d'eau est configuré pour surveiller et pour analyser des données de concentration de gaz sursaturé, des données de température d'eau et des données de profondeur d'eau dans une masse d'eau courante.

3. Système selon la revendication 2, dans lequel une trajectoire de déplacement vertical de l'appareil de détection planeur sous-marin dans la masse d'eau est :

$$Z = A\sin(\omega x + \varphi) + b,$$

dans laquelle $Z$ représente une profondeur verticale de déplacement de l'appareil de détection planeur sous-marin dans la masse d'eau, A est un coefficient d'étendue verticale, $x$ représente une position de surveillance, $\omega$, $\varphi$ sont des coefficients de surveillance de direction d'écoulement, et b est un coefficient d'incertitude.

4. Système selon la revendication 2, dans lequel l'unité d'interaction de données est configurée pour construire le modèle de prédiction de sursaturation de gaz sur la base du jumeau numérique d'évacuation de crue par un procédé comprenant les étapes suivantes consistant à :

déterminer, par le modèle de prédiction de sursaturation de gaz, un degré de sursaturation de gaz au niveau d'un point de départ dans le bassin aval en tant que condition initiale du modèle de prédiction de sursaturation de gaz sur la base des données d'ingénierie de base et du facteur de schéma de planification d'évacuation de crue ;

effectuer, par le modèle de prédiction de sursaturation de gaz, un calcul prédictif sur la base de la condition initiale en combinaison avec les données topographiques, les données de confluence d'affluent de cours d'eau principal, les données d'écoulement d'affluent de cours d'eau principal et avec les données d'obstacle du bassin aval, et déterminer des valeurs de prédiction de degré de sursaturation de gaz au niveau de sections transversales de la pluralité de sections transversales clés dans le bassin aval ;

comparer les degrés de sursaturation de gaz au niveau de la pluralité de sections transversales clés mesurés par la pluralité d'appareils d'observation de section transversale aux valeurs de prédiction de degré de sursaturation de gaz correspondantes, et si une différence entre les deux valeurs dépasse un seuil prédéfini, effectuer à nouveau une prédiction en prenant les degrés de sursaturation de gaz mesurés par les appareils d'observation de section transversale en tant que condition initiale mise à jour du modèle de prédiction de sursaturation de gaz ; et

mettre à jour et itérer le modèle de prédiction de sursaturation de gaz par de multiples comparaisons, jusqu'à ce que les degrés de sursaturation de gaz mesurés par les appareils d'observation de section transversale au niveau de la pluralité de sections transversales clés correspondent tous aux valeurs de prédiction de degré de sursaturation de gaz correspondantes.

5. Système selon la revendication 4, dans lequel le module de prédiction de degré de saturation est configuré pour prédire le degré de sursaturation de gaz au niveau du point de départ dans le bassin aval par la formule suivante :

$$G = 0.5 \frac{\Delta P_d}{P_0} \beta_1 \beta_2 e^{h_d^{0.5}},$$

dans laquelle $G$ représente le degré de sursaturation de gaz, $\Delta P_d$ représente une pression relative moyenne du bassin aval, $P_0$ représente une pression initiale de masse d'eau, $\beta_1$ représente un coefficient de schéma de planification d'évacuation de crue, $\beta_2$ représente un coefficient de correction, et $h_d$ représente une profondeur d'eau locale dans le bassin aval.

6. Système selon la revendication 4, dans lequel le module de prédiction d'atténuation de saturation est configuré pour prédire des coefficients d'émission de gaz sursaturé au niveau de la pluralité de sections transversales par la formule suivante :

$$k_{i+1} = k_i \left( \tau \sqrt{\frac{\Psi_t u_i}{h}} + \xi(\phi_i - 1)\frac{Q}{h^2 u_i} \right),$$

dans laquelle $k_i$, $k_{i+1}$ représentent respectivement des coefficients d'émission de gaz sursaturé au niveau d'une $i^{\text{éme}}$ section transversale clé et d'une $(i+1)^{\text{ième}}$ section transversale clé, $\tau$ représente un coefficient de correction d'émission de gaz, $\Psi_t$ représente un coefficient de diffusion de gaz, et $u_i$ représente un débit moyen au niveau de la $i^{\text{ème}}$ section transversale clé, $h$ représente une profondeur d'eau moyenne de section transversale, $Q$ représente un écoulement moyen de section transversale, et $\phi_i$ représente un coefficient de confluence d'affluent de cours d'eau principal.

7. Système selon la revendication 1, dans lequel le module de protection d'alerte précoce comprend une unité d'annonce ;

l'unité d'annonce est configurée pour générer les informations d'alerte précoce conformément à l'état de sursaturation de gaz dissous prédit et pour annoncer les informations d'alerte précoce ; et
l'unité d'annonce est en outre configurée pour générer des informations de régulation optimisée écologique, des informations d'ajustement d'affluent de cours d'eau principal et des informations d'ajustement aquacole correspondant aux informations d'alerte précoce.

Early-warning and regulating control system for dissolved gas supersaturation in flood discharge of a hydraulic dam

Flood discharge body digital module

Flood discharge basin data unit 1020

Flood discharge influence factor unit 1022

Basin physical and chemical monitoring unit 1024

102

Flood discharge digital twin module

Dam digital twin unit 1040

Downstream basin digital twin unit 1042

104

Data interaction prediction module

Data interaction unit 1060

Intelligent prediction unit 1064

Machine learning unit 1062

106

Early-warning protection module 108

100

FIG. 1

Basin physical and chemical monitoring unit

| Underwater gliding detection apparatus | Cross-sectional observation apparatus 204 |
| | Cross-sectional observation apparatus 204 |
| | Cross-sectional observation apparatus 204 |
| 200 | ······ |

1024

FIG. 2

The gas supersaturation prediction model determines a gas supersaturation degree at a starting point in the downstream basin as an initial condition of the gas supersaturation prediction model based on the basic engineering data and the flood discharge scheduling scheme factor → S301

The gas supersaturation prediction model performs predictive calculation based on the initial condition in combination with the topographical data, the mainstream tributary confluence data, the mainstream tributary flow data, and the obstacle data of the downstream basin, and determines gas supersaturation degree prediction values at the plurality of key cross-sections in the downstream basin → S302

Compare the gas supersaturation degrees at the plurality of key cross-sections measured by the plurality of cross-sectional observation apparatuses 204 with the corresponding gas supersaturation degree prediction values, and if a difference between the two values exceeds a preset threshold, perform prediction again by taking the gas supersaturation degrees measured by the cross-sectional observation apparatuses 204 as an updated initial condition of the gas supersaturation prediction model → S303

Update and iterate the gas supersaturation prediction model by multiple times of comparisons, until the gas supersaturation degrees measured by the cross-sectional observation apparatuses 204 at the plurality of key cross-sections all match the corresponding gas supersaturation degree prediction values → S304

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113222296 A

- CN 106544982 B